# EUROPÄISCHE PATENTSCHRIFT

(11) **EP 1 907 252 B1**
(45) Veröffentlichungstag und Bekanntmachung des Hinweises auf die Patenterteilung: **12.01.2011**
(21) Anmeldenummer: 06763422.0
(22) Anmeldetag: 31.05.2006
(51) Int. Cl.: B60T 8/36, F16K 31/06

(54) **FAHRZEUGBREMSANLAGEN-MAGNETVENTILANORDNUNG**
SOLENOID VALVE ARRANGEMENT FOR AN AUTOMOTIVE BRAKING SYSTEM
DISPOSITIF D'ELECTROVANNE POUR SYSTEME DE FREINAGE DE VEHICULE

(30) Priorität: 15.07.2005 DE 102005033134
(43) Veröffentlichungstag der Anmeldung: 09.04.2008
(73) Patentinhaber: ROBERT BOSCH GMBH, 70442 Stuttgart (DE)
(72) Erfinder: SCHNALZGER, Guenther, 87544 Blaichach (DE); KIRSCHNER, Martin, 87544 Blaichach (DE)
(86) Internationale Anmeldenummer: PCT/EP2006/062792
(87) Internationale Veröffentlichungsnummer: WO 2007/009832

(56) Entgegenhaltungen:
- EP-A- 0 149 239
- DE-A1- 2 610 579
- DE-A1- 4 102 719
- US-A- 3 378 031

## Beschreibung

### Stand der Technik

Die Erfindung betrifft eine Fahrzeugbremsanlagen-Magnetventilanordnung, wie sie beispielsweise bei Antiblockiersystemen, bei Traktionskontrollsystemen oder fahrdynamischen Regelungssystemen von Kraftfahrzeugen verwendet wird. Bei derartigen Fahrzeugbremsanlagen ist es bekannt Drei-Stellungs-Drei-Wegeventile zu verwenden (sogenannte 3/3-Ventile) da diese im Vergleich zu Zwei-Stellungs-Zwei-Wegeventilen besonders wenig Bauraum benötigen und insgesamt die Anzahl der erforderlichen Magnetventilanordnungen innerhalb der Fahrzeugbremsanlage verringert werden kann.

Aus EP 0 149 239 A ist eine Fahrzeugbremsanlagen-Magnetventilanordnung, welche als Drei-Stellungs-Drei-Wegeventil gestaltet ist, bekannt. Dabei sind zwei Anker sowie eine einzige Ankerwicklung vorgesehen und beide Anker sollen mit der einen Ankerwicklung bewegbar sein.

Aus DE 41 02 719 A1 ist ein Solenoidventil zum Steuern eines Bremsdrucks eines Antiblockier-Systems für einen Kraftwagen bekannt. Durch Anlegen eines Stromes an eine Solenoidspule des Solenoidventils wird eine magnetische Anziehungskraft bewirkt, mit der drei Verbindungstore geöffnet bzw. geschlossen werden können.

Bekannte 3/3-Ventile, welche die speziell bei Fahrzeugbremsanlagen vorliegenden Randbedingungen erfüllen, weisen jedoch ein vergleichsweise großes Bauvolumen auf und sind ferner derart komplex gestaltet, dass mit ihnen die angestrebten Kostenziele bei der Herstellung nicht erreicht werden können. Ferner wird im Zuge der Weiterentwicklung von Magnetventilanordnungen bei Fahrzeugbremsanlagen eine weitere Gewichtsreduzierung gefordert.

### Aufgabe und Lösung der Erfindung

Es ist eine Aufgabe der Erfindung, eine Fahrzeugbremsanlagen-Magnetventilanordnung der eingangs genannten Art derart zu verbessern, dass die angestrebten Kostenziele erreicht und ferner eine weitere Bauraum- und Gewichtsreduzierung im Vergleich zu bekannten Drei-Stellungs-Drei-Wegeventilen von Fahrzeugbremsanlagen erreicht wird.

Die Aufgabe ist erfindungsgemäß mit einer Fahrzeugbremsanlagen-Magnetventilanordnung gelöst, welche als Drei-Stellungs-Drei-Wegeventil gestaltet ist und bei der zwei Anker sowie eine einzige Ankerwicklung vorgesehen und beide Anker mit der einen Ankerwicklung bewegbar sind und bei der jedem der beiden Anker jeweils ein Dichtsitz zugeordnet ist und die beiden Dichtsitze in axialer Richtung der beiden Anker betrachtet an einer Seite der Magnetventilanordnung angeordnet sind.

Im Gegensatz zu bekannten 3/3-Ventilen von Fahrzeugbremsanlagen, ist erfindungsgemäß eine Magnetventilanordnung vorgesehen, welche mit zwei "fliegenden" Ankern gestaltet ist. Die beiden Anker können mit einer einzigen Ankerwicklung betätigt werden, wodurch insgesamt der konstruktive Aufbau der Magnetventilanordnung besonders einfach gehalten werden kann. Ferner führt die derartige erfindungsgemäße Konstruktion zu besonderen Vorteilen im Hinblick auf Bauraum, Gewicht und Anschlusssituation von hydraulischen Leitungen an der erfindungsgemäßen Fahrzeugbremsanlagen-Magnetventilanordnung.

Eine derartige Ausgestaltung und Anordnung von Dichtsitzen an der Fahrzeugbremsanlagen-Magnetventilanordnung gemäß der Erfindung führt dazu, dass ein Ein- und Auslassventilsitz auf einer Seite der Magnetventilanordnung platziert werden können und somit diese Dichtsitze auch von einer Seite in einen Pumpengehäuseblock eingebaut werden können. Ein zweiseitiger Einbau von Dichtsitzen, wie es zum Teil bei bekannten Antiblockiersystemen erforderlich ist, oder eine besondere Rückführung von Leitungen innerhalb eines Pumpengehäuseblocks, wie es ferner im Stand der Technik beschrieben ist, kann hingegen entfallen.

Dennoch können durch Anlehnung an bekannte Fertigungstechniken wie beispielsweise Zieh-, Kaltschlag-, Stanz-, und andere große Serientechniken, die erforderlichen Bauteile der Fahrzeugbremsanlagen-Magnetventilanordnung kostengünstig hergestellt und montiert werden.

Die beiden oben genannten Dichtsitze der Fahrzeugbremsanlagen-Magnetventilanordnung sind besonders vorteilhaft in oder an einer gemeinsamen Dichtscheibe ausgebildet. Unter Ausbildung in oder an einer gemeinsamen Dichtscheibe ist hier zu verstehen, dass der einzelne Dichtsitz innerhalb der Dichtscheibe selbst ausgeformt ist oder aber in einem Einzelbauteil, welches dann in die Dichtscheibe eingesetzt ist. Wichtig ist, dass die beiden Dichtsitze derart in einer einzelnen Dichtscheibe angeordnet sind, dass diese entsprechend vormontiert und dann bei der Endmontage der Fahrzeugbremsanlagen-Magnetventilanordnung an eine vorbestimmte Stelle eingesetzt werden kann. Die Dichtscheibe kann dann bereits vor der Montage im Hinblick auf die dort ausgebildeten Dichtsitze speziell geprüft werden.

Darüber hinaus ist eine derartige Dichtscheibe auch besonders gut dazu geeignet, an ihr einen weiteren Dichtsicht auszubilden. Dieser weitere Dichtsitz ist besonders vorteilhaft einem Rückschlagventil zugeordnet, sodass auf diese Weise die Funktionalität der Magnetventilanordnung weiter erhöht werden kann.

Um eine besonders kompakte Bauform zu erreichen, ist es vorteilhaft, die drei Dichtsitze im Querschnitt betrachtet an der Dichtscheibe insgesamt in einer Dreiecksform anzuordnen. Alternativ können die Dichtsitze auch entlang einer geraden Linie verteilt sein, wobei dann aber in der Regel ein größerer Platzbedarf die Folge ist.

An der genannten Dichtscheibe, an der vorteilhaft die drei oben erläuterten Dichtsitze ausgebildet sind, wird ferner vorteilhaft an einer ihrer Stirnflächen Bremsdruck von einem Hauptbremszylinder angelegt. Der Bremsdruck kann dann vorteilhaft je nach Schaltstellung der zugehörigen Ventile durch einen der beiden Dichtsitze und/oder durch das Rückschlagventil geleitet werden.

Um mit nur einer Ankerwicklung die für eine Fahrzeugbremsanlage notwendigen Schaltstellungen der beiden Anker im besonders einfacher Weise erzielen zu können, ist es von Vorteil, wenn die beiden Anker jeweils einen Ankerkern aufweisen und diese beiden Ankerkerne dann axial hintereinander angeordnet sind.

Mit den beiden Ankern sollte ferner an den zugehörigen Dichtsitzen mit Hilfe von Ventilstößeln wahlweise abgedichtet werden. Um bei dieser Bewegung der Ventilstößeln ein Verklemmen der Anordnung zu verhindern, ist es besonders von Vorteil, wenn einer der beiden Anker einen Stößel aufweist, der durch den Ankerkern des anderen Ankers hindurchgeführt ist. Die dabei erforderliche Abfederung der einzelnen Stößel sollte jeweils koaxial bzw. konzentrisch zum einzelnen Stößel gestaltet sein. Eine Schiefstellung der Anker und Stößeln durch Federkraft wird dadurch vermieden. Ferner sollten die Anker an ihren Polflächen jeweils möglichst symmetrische bzw. ausgewogene Flächen aufweisen, was vorteilhaft erreicht werden kann, indem beide Anker einen Stößel aufweisen und die beiden Stößel im Querschnitt betracht nebeneinander angeordnet sind. Durch diese Weiterbildung wird ebenfalls eine Schiefstellung der Anker und Stößel, diesmal durch magnetische Querkräfte, vermieden.

Für eine kompakte Bauform und für ausgeglichene Feder- und Magnetkräfte ist es ferner besonders vorteilhaft, wenn die beiden Stößel im Querschnitt betrachtet innerhalb einer Kreisform im Wesentlichen einander diametral gegenüberliegend angeordnet sind.

Darüber hinaus ist es zur Erzielung der gewünschten Schaltstellungen von Vorteil, wenn die genannten Anker mit verschieden starken Rückstellfedern abgestützt sind.

### Kurzbeschreibung der Zeichnungen

Nachfolgend werden Ausführungsbeispiele erfindungsgemäßer Fahrzeugbremsanlagen-Magnetventilanordnungen anhand der beigefügten schematischen Zeichnungen näher erläutert. Es zeigt:
Fig. 1 einen Längsschnitt eines ersten Ausführungsbeispiels einer erfindungsgemäßen Fahrzeugbremsanlagen-Magnetventilanordnung,
Fig. 2 einen Schnitt aus Fig. 1,
Fig. 3 den Schnitt gemäß Fig. 2 bei einem zweiten Ausführungsbeispiel einer erfindungsgemäßen Fahrzeugbremsanlagen-Magnetventilanordnung und
Fig. 4 den Schnitt gemäß Fig. 2 bei einem dritten Ausführungsbeispiel einer erfindungsgemäßen Fahrzeugbremsanlagen-Magnetventilanordnung.

### Detaillierte Beschreibung der Ausführungsbeispiele

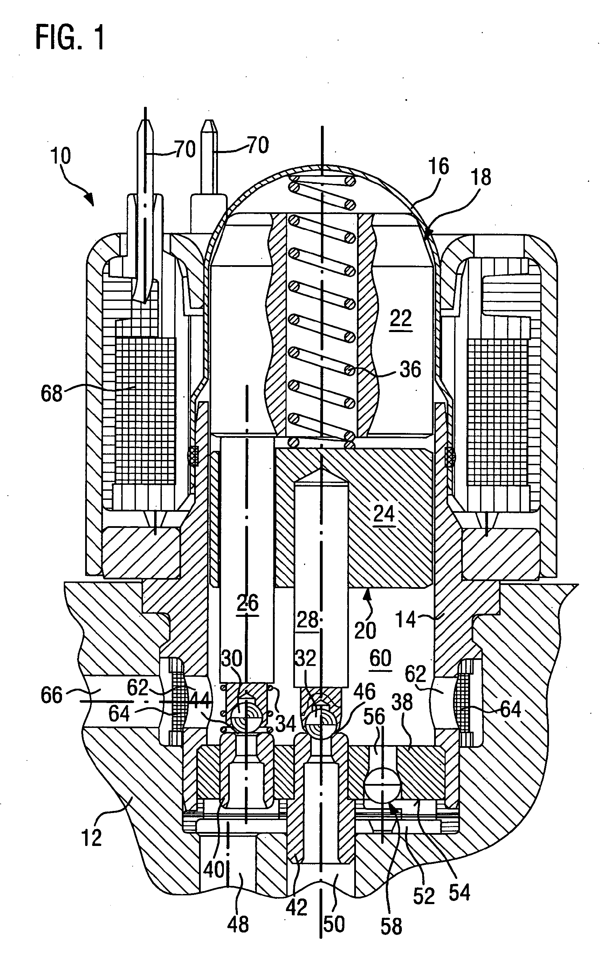

In Fig. 1 ist ein Längsschnitt einer Fahrzeugbremsanlagen-Magnetventilanordnung 10 dargestellt, welche erfindungsgemäß als ein Drei-Stellungs-Drei-Wege-Ventil gestaltet ist.

Die Magnetventilanordnung 10 ist an einem nur abschnittsweise dargestellten würfelförmigen Hydraulikblock 12 aus Aluminium angeordnet und umfasst als zentrale Bauteile eine in den Hydraulikblock 12 eingesetzte rohrförmige Führungshülse 14, auf die eine hutförmige Führungskappe 16 aufgesetzt ist. In der derart angeordneten Führungshülse 14 und Führungskappe 16 sind ein erster Anker 18 und ein zweiter Anker 20 angeordnet und jeweils fliegend geführt.

Die beiden Anker 18 und 20 sind axial aufeinander folgend und bezogen auf Fig. 1 übereinander angeordnet. Sie umfassen je einen im Wesentlichen zylindrischen Ankerkern 22 bzw. 24 sowie einen vom Ankerkern nach unten abstehenden Stößel 26 bzw. 28. Der Stößel 26 des oberen Ankers 18 erstreckt sich dabei durch den Ankerkern 24 des unteren Ankers 20 in axialer Richtung hindurch. Der Stößel 28 des unteren Ankers 20 erstreckt sich weit in dessen Ankerkern 24 hinein.

An den unteren Endbereichen der Stößel 26 und 28 ist jeweils eine Dichtkugel 30 bzw. 32 ortsfest eingesetzt.

Der untere Anker 20 ist gegen die hutförmige Führungskappe 16 mit einer Rückstellfeder 34 abgestützt, welche sich durch den Ankerkern 22 des oberen Ankers 18 hindurch erstreckt und den Ankerkern 24 des Ankers 20 im Querschnitt betrachtet in dessen Zentrum gegenüber vom Stößel 28 mit Federkraft belastet. Der Anker 18 ist mit Hilfe einer Rückstellfeder 36 bezogen auf Fig. 1 nach oben federnd vorgespannt, welche am unteren Endbereich des Stößels 26 angeordnet und gegen eine Dichtscheibe 38 abgestützt ist. Mit Hilfe dieser Rückstellfeder 36 ist (ähnlich wie der Stößel 28) der Stößel 26 zentrisch federnd vorgespannt.

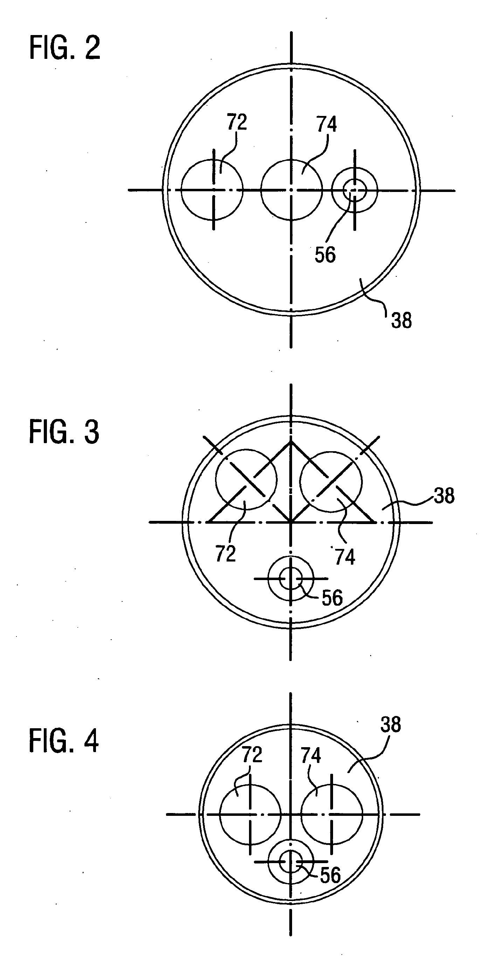

In die Dichtscheibe 38 sind (wie auch in den Fig. 2 bis 4 zu erkennen ist) jeweils bezogen auf die Fig. 1 links eine erste hohlzylindrische Durchführung 40 und bezogen auf die Fig. 1 rechts eine zweite hohlzylindrische Durchführung 42 eingesetzt. An diesen Durchführungen 40 und 42 befindet sich bezogen auf Fig. 1 an der Oberseite jeweils ein Dichtsitz 44 bzw. 46, welcher dann gegenüber von den oben genannten Dichtkugeln 30 bzw. 32 liegt.

Zu dem bezogen auf Fig. 1 unteren Endbereich der Durchführungen 40 und 42 ist eine Zulaufleitung 48 bzw. eine Rücklaufleitung 50 geführt. Durch die Zulaufleitung 48 wird unter Druck stehendes Hydraulikfluid von einem (nicht dargestellten) Hauptbremszylinder der zugehörigen Fahrzeugbremsanlage zur Durchführung 40 und ferner zu einem Querkanal 52 geführt, welcher sich an der bezogen auf Fig. 1 unteren Stirnfläche 54 der Dichtscheibe 38 befindet. Mit diesem Querkanal 52 wird das Hydraulikfluid ferner zu einer Durchgangsöffnung 56 zugeführt, welche (ähnlich wie die Durchführungen 40 und 42) ebenfalls die Dichtscheibe 38 durchsetzt. In der Durchgangsöffnung 56 ist ein Rückschlagventil 58 angeordnet, mit dem die Durchgangsöffnung 56 wahlweise verschlossen werden kann.

An der bezogen auf Fig. 1 oberen Seite der Dichtscheibe 38 führen aus einem mit der rohrförmige Führungshülse 14 gebildeten Innenraum 60 mehrere an der Mantelfläche der Führungshülse 14 verteilte Öffnungen 62 nach außen. Diese Öffnungen 62 sind von einem Filterring 64 umgeben und weiter an eine Radanschlussleitung 66 angeschlossen, welche zu (nicht dargestellten) Rabbremszylindern führt.

Der bezogen auf Fig. 1 obere Abschnitt der rohrförmigen Führungshülse 14 sowie die hutförmige Führungskappe 16 sind außenseitig mit einer im Wesentlichen hohlzylindrisch ausgebildeten Ankerwicklung 68 umgeben, an der zwei elektrische Anschlüsse 70 zum Verbinden mit einem (nicht dargestellten) Steuergerät vorgesehen sind.

Die derartige Fahrzeugbremsenanlagen-Magnetventilanordnung 10 funktioniert wie folgt:
Im in Fig. 1 dargestellten Zustand ist der Dichtsitz 44 offen und ein Fahrer des zugehörigen Kraftfahrzeugs kann vom Hauptbremszylinder zum Radbremszylinder Druck aufbauen. Bei einem zu hohen Bremsdruck bzw. einem Blockieren des zugehörigen Rades, wird über eine erste Stromstufe an der Ankerwicklung 68 der obere Anker 18 zum unteren Anker 20 hin bewegt. Die Rückstellfeder 34 ist dabei derart gestaltet, dass sie eine höhere Federkraft als die Rückstellfeder 36 aufweist. Daher wird der Anker 20 durch diese höhere Federkraft an einer Bewegung bezogen auf Fig. 1 nach oben gehindert. Die Folge ist ein alleiniges Schließen des Dichtsitzes 44 mit Hilfe der am Stößel 26 angeordneten Dichtkugel 30.

Die Folge ist ein Einsperren des Druckes am Radbremszylinder und somit eine Druckhaltestufe.

Bei weiterhin blockierendem Rad, wird über eine zweite Stromstufe der untere Anker 20 in Richtung zum oberen Anker 18 bezogen auf Fig. 1 nach oben bewegt. Dabei wird durch den Stößel 26 am Dichtsitz 44 verhindert, dass sich der obere Anker 18 weiter in seine Vorzugsrichtung (d.h. bezogen auf Fig. 1 nach unten) bewegen kann.

Durch die Bewegung des unteren Ankers 20 bezogen auf Fig. 1 nach oben wird der zugehörige Stößel 28 zusammen mit der daran angeordneten Dichtkugel 32 vom Dichtsitz 46 abgehoben und es wird der Weg in die Rücklaufleitung 50 hin zu einer (nicht dargestellten) Rückförderpumpe freigegeben.

Durch dieses Freigeben der Rücklaufleitung 50 wird der Druck am Rad reduziert und dessen Blockierung wird gelöst.

Beendet der Fahrer den Bremsvorgang, geht die Ankerwicklung 68 in den unbestromten Ausgangszustand, wodurch die Anker 18 und 20 mit Hilfe der Rückstellfedern 34 bzw. 36 in die in Fig. 1 dargestellte Ausgangslage gedrängt werden. Nun kann das federlose Rückschlagventil 58 öffnen, um einen zusätzlichen Rücklaufquerschnitt freizugeben und ein Nachbremsen durch einen zu langsamen Druckabbau aus dem Radbremszylinder durch den Dichtsitz 44 hindurch zu verhindern. Das Rückschlagventil 58 schließt selbstständig (bzw. druckunterstützt) sobald es wieder zu einem Druckaufbau durch den Fahrer oder ein anderes eine Bremsung auslösendes Steuersystem kommt.

In den Fig. 2 bis 4 sind mehrere Ausführungsformen für mögliche Anordnungen der beiden Dichtsitze 44 und 46 sowie des Rückschlagventils 58 innerhalb der Querschnittsfläche der Dichtscheibe 38 dargestellt. Die in Fig. 2 gezeigt Ausführungsform weist dabei eine linienförmige Anordnung dieser dreier Elemente auf. Eine solche Anordnung kann fertigungstechnisch besonders sinnvoll sein, bedarf jedoch einer vergleichsweise großen Querschnittsfläche für die Dichtscheibe 38. Diese große Querschnittsfläche ist insbesondere dadurch bedingt, dass beim vorliegenden Fall in der Dichtscheibe 38 zum Ausbilden der Dichtsitze 44 bzw. 46 jeweils die genannten Durchführungen 40 bzw. 42 als hohlzylindrische Hülsen vorgesehen sind. Solche Hülsen können ebenfalls aus fertigungstechnischen Gründen besonders sinnvoll sein, weil dann für die genanten Dichtsitze 44 sowie 46 spezielle Materialien bzw. Oberflächen genutzt werden können. Für die Durchführungen 40 und 42 sind daher in der Dichtscheibe 38 zwei Bohrungen 72 bzw. 74 vorgesehen. Bei einer alternativen, nicht dargestellten und ebenfalls sehr vorteilhaften Ausführungsform ist jedoch auf die Durchführungen 40 und 42 verzichtet worden und die Dichtsitze 44 bzw. 46 sind unmittelbar in der Dichtscheibe 38 ausgebildet. Bei einer solchen Ausführungsform kann dann gegebenenfalls auch die Querschnittsfläche der Dichtscheibe 38 kleiner gestaltet sein.

Eine weitere sehr vorteilhafte Lösung zur Verringerung der Querschnittsfläche der Dichtscheibe 38 und damit auch der gesamten Baugröße der Magnetventilanordnung 10 sind die in den Fig. 3 und 4 dargestellten Ausführungsformen, bei denen die drei Elemente Bohrung 72, Bohrung 74 und Durchgangsöffnung 56 in einer Dreiecksform angeordnet sind

Eine besonders kompakte Bauform, die darüber hinaus gut hergestellt und zu besonders symmetrischen Kraftverhältnissen an den Ankern 18 und 20 führt, ist in Fig. 4 dargestellt, Bei dieser Ausführungsform sind die Bohrungen 72 und 74 diametral gegenüberliegend angeordnet und die Durchgangsöffnung 56 auf einer der damit gebildeten Querschnittshälften mittig ausgebildet. Mit der derartigen Gestaltung ergibt sich eine zusätzliche Durchmesserreduzierung und der Vorteil einer besonders geringen bzw. keiner Schiefstellung der Anker 18 und 20 sowie deren Stößel 26 und 28 durch feder- bzw. magnetische Querkräfte während des Betriebs der Magnetventilanordnung 10.

Besonders vorteilhaft ist es ferner, wenn der untere Anker 20 zwei Durchgangsöffnungen aufweist, von denen eine mit einem geringen Führungsspiel für den Durchlass des Stößels 26 versehen ist, während die zweite Durchgangsöffnung insbesondere vorteilhaft mit einem Presssitz den Stößel 28 aufnimmt. An den Polflächen des derartigen unteren Ankers 20 liegt dann eine ausgewogene Fläche vor, wodurch ausgeglichene Magnetkräfte zum oberen Anker 18 entstehen.

### Bezugszeichenliste

- 10: Fahrzeugbremsenanlagen-Magnetventilanordnung
- 12: Hydraulikblock
- 14: Führungshülse
- 16: Führungskappe
- 18: Anker
- 20: Anker
- 22: Ankerkern
- 24: Ankerkern
- 26: Stößel
- 28: Stößel
- 30: Dichtkugel
- 32: Dichtkugel
- 34: Rückstellfeder
- 36: Rückstellfeder
- 38: Dichtscheibe
- 40: Durchführung
- 42: Durchführung
- 44: Dichtsitz
- 46: Dichtsitz
- 48: Zulaufleitung
- 50: Rücklaufleitung
- 52: Querkanal
- 54: Stirnfläche
- 56: Durchgangsöffnung
- 58: Rückschlagventil
- 60: Innenraum
- 62: Öffnung
- 64: Filterring
- 66: Radanschlussleitung
- 68: Ankerwicklung
- 70: elektrischer Anschluss
- 72: Bohrung
- 74: Bohrung

## Patentansprüche

1. Fahrzeugbremsanlagen-Magnetventilanordnung (10), welche als Dreistellungs-Drei-Wegeventil gestaltet ist, bei der
- zwei Anker (18, 20) sowie eine einzige Ankerwicklung (68) vorgesehen und beide Anker (18, 20) mit der einen Ankerwicklung (68) bewegbar sind,
- jedem der beiden Anker (18, 20) jeweils ein Dichtsitz (44, 46) zugeordnet ist und die beiden Dichtsitze (44, 46) in axialer Richtung der beiden Anker (18, 20) betrachtet an einer Seite der Magnetventilanordnung (10) angeordnet sind.

2. Fahrzeugbremsanlagen-Magnetventilanordnung nach Anspruch 1,
**dadurch gekennzeichnet, dass** die beiden Dichtsitze (44, 46) in oder an einer gemeinsamen Dichtscheibe (38) ausgebildet sind.

3. Fahrzeugbremsanlagen-Magnetventilanordnung nach Anspruch 1 oder 2,
**dadurch gekennzeichnet, dass** außer den beiden Dichtsitzen (44, 46) ferner ein dritter Dichtsitz, insbesondere eines Rückschlagventils (58), vorgesehen ist.

4. Fahrzeugbremsanlagen-Magnetventilanordnung nach Anspruch 3,
**dadurch gekennzeichnet, dass** die drei Dichtsitze (44, 46, 58) im Querschnitt betrachtet insgesamt eine Dreiecksform bilden.

5. Fahrzeugbremsanlagen-Magnetventilanordnung nach Anspruch 3 oder 4,
**dadurch gekennzeichnet, dass** die drei Dichtsitze (44, 46, 58) in oder an einer gemeinsamen Dichtscheibe (38) ausgebildet sind, an der insbesondere an einer ihrer Stirnflächen (54) Bremsdruck von einem Hauptbremszylinder angelegt werden kann.

6. Fahrzeugbremsanlagen-Magnetventilanordnung nach einem der Ansprüche 1 bis 5,
**dadurch gekennzeichnet, dass** die beiden Anker (18, 20) jeweils einen Ankerkern (22, 24) aufweisen und die beiden Ankerkerne (22, 24) axial hintereinander angeordnet sind.

7. Fahrzeugbremsanlagen-Magnetventilanordnung nach Anspruch 6,
**dadurch gekennzeichnet, dass** einer der beiden Anker (18, 20) einen Stößel (26) aufweist, der durch den Ankerkern (24) des anderen Ankers (20) hindurchgeführt ist.

8. Fahrzeugbremsanlagen-Magnetventilanordnung nach einem der Ansprüche 1 bis 7,
**dadurch gekennzeichnet, dass** beide Anker (18, 20) einen Stößel (26, 28) aufweisen und die beiden Stößel (26, 28) im Querschnitt betrachtet nebeneinander angeordnet sind.

9. Fahrzeugbremsanlagen-Magnetventilanordnung nach Anspruch 8,
**dadurch gekennzeichnet, dass** die beiden Stößel (26, 28) im Querschnitt betrachtet innerhalb einer Kreisform im Wesentlichen einander diametral gegenüberliegend angeordnet sind.

10. Fahrzeugbremsanlagen-Magnetventilanordnung nach einem der Ansprüche 1 bis 9,
**dadurch gekennzeichnet, dass** die beiden Anker (18, 20) Ankerkerne (22, 24) aufweisen, die jeweils mit einer Rückstellfeder (34, 36) federnd vorgespannt sind, und die beiden Rückstellfedern (34, 36) verschieden stark ausgelegt sind.

## Claims

1. Solenoid valve arrangement (10) for an automotive braking system, which solenoid valve arrangement is configured as a three-position three-way valve and in which
- two armatures (18, 20) and a single armature winding (68) are provided, and both armatures (18, 20) can be moved with the one armature winding (68),
- each of the two armatures (18, 20) is respectively assigned a sealing seat (44, 46), and the two sealing seats (44, 46) are arranged on one side of the solenoid valve arrangement (10), viewed in the axial direction of the two armatures (18, 20).

2. The solenoid valve arrangement for an automotive braking system according to Claim 1,
**characterized in that** the two sealing seats (44, 46) are formed in or on a common sealing disc (38).

3. Solenoid valve arrangement for an automotive braking system according to Claim 1 or 2,
**characterized in that**, apart from the two sealing seats (44, 46), a third sealing seat, in particular a nonreturn valve (58), is also provided.

4. Solenoid valve arrangement for an automotive braking system according to Claim 3,
**characterized in that** the three sealing seats (44, 46, 58) form overall a triangular shape when viewed in cross section.

5. Solenoid valve arrangement for an automotive braking system according to Claim 3 or 4,
**characterized in that** the three sealing seats (44, 46, 58) are formed in or on a common sealing disc (38) on which, in particular on one of whose end faces (54), braking pressure can be applied by a master brake cylinder.

6. Solenoid valve arrangement for an automotive braking system according to one of Claims 1 to 5,
**characterized in that** the two armatures (18, 20) each have an armature core (22, 24), and the two armature cores (22, 24) are arranged axially one behind the other.

7. Solenoid valve arrangement for an automotive braking system according to Claim 6,
**characterized in that** one of the two armatures (18, 20) has a plunger (26) which is guided through the armature core (24) of the other armature (20).

8. Solenoid valve arrangement for an automotive braking system according to one of Claims 1 to 7,
**characterized in that** both armatures (18, 20) have a plunger (26, 28), and the two plungers (26, 28) are arranged one next to the other when viewed in cross section.

9. Solenoid valve arrangement for an automotive braking system according to Claim 8,
**characterized in that** the two plungers (26, 28) are arranged essentially diametrically opposite one another within a circular shape when viewed in cross section.

10. Solenoid valve arrangement for an automotive braking system according to one of Claims 1 to 9,
**characterized in that** the two armatures (18, 20) have armature cores (22, 24) which are each prestressed in a sprung fashion with a restoring spring (34, 36), and the two restoring springs (34, 36) are configured with different strengths.

## Revendications

1. Agencement d'électrovannes pour installation de freinage de véhicule (10), qui est configuré sous forme de soupape à trois voies à trois positions dans laquelle
- deux armatures (18, 20) ainsi qu'un enroulement d'armature unique (68) sont prévus et les deux armatures (18,20) peuvent être déplacées avec l'enroulement d'armature (68),
- chacune des deux armatures (18, 20) est associée à chaque fois à un siège d'étanchéité (44, 46) et les deux sièges d'étanchéité (44, 46) sont disposés, considérés dans la direction axiale des deux armatures (18, 20), sur un côté de l'agencement d'électrovannes (10).

2. Agencement d'électrovannes pour installation de freinage de véhicule selon la revendication 1, **caractérisé en ce que** les deux sièges d'étanchéité (44, 46) sont réalisés dans ou sur un disque d'étanchéité commun (38).

3. Agencement d'électrovannes pour installation de freinage de véhicule selon la revendication 1 ou 2, **caractérisé en ce qu'**en plus des deux sièges d'étanchéité (44, 46), il est prévu en outre un troisième siège d'étanchéité, notamment d'une soupape antiretour (58).

4. Agencement d'électrovannes pour installation de freinage de véhicule selon la revendication 3, **caractérisé en ce que** les trois sièges d'étanchéité (44, 46, 58), considérés en section transversale, forment ensemble une forme triangulaire.

5. Agencement d'électrovannes pour installation de freinage de véhicule selon la revendication 3 ou 4, **caractérisé en ce que** les trois sièges d'étanchéité (44, 46, 58) sont réalisés dans ou sur un disque d'étanchéité commun (38), sur lequel peut être appliquée, notamment sur l'une de ses surfaces frontales (54), la pression de freinage d'un cylindre de freinage principal.

6. Agencement d'électrovannes pour installation de freinage de véhicule selon l'une quelconque des revendications 1 à 5, **caractérisé en ce que** les deux armatures (18, 20) présentent chacune un noyau d'armatures (22, 24) et les deux noyaux d'armatures (22, 24) sont disposés axialement l'un derrière l'autre.

7. Agencement d'électrovannes pour installation de freinage de véhicule selon la revendication 6, **caractérisé en ce que** l'une des deux armatures (18, 20) présente un poussoir (26) qui est guidé à travers le noyau d'armature (24) de l'autre armature (20).

8. Agencement d'électrovannes pour installation de freinage de véhicule selon l'une quelconque des revendications 1 à 7, **caractérisé en ce que** les deux armatures (18, 20) présentent un poussoir (26, 28) et les deux poussoirs (26, 28), considérés en section transversale, sont disposés l'un à côté de l'autre.

9. Agencement d'électrovannes pour installation de freinage de véhicule selon la revendication 8, **caractérisé en ce que** les deux poussoirs (26, 28), considérés en section transversale, sont disposés à l'intérieur d'une forme circulaire de manière essentiellement opposée diamétralement l'un à l'autre.

10. Agencement d'électrovannes pour installation de freinage de véhicule selon l'une quelconque des revendications 1 à 9, **caractérisé en ce que** les deux armatures (18, 20) présentent des noyaux d'armatures (22, 24) qui sont précontraints par ressort à chaque fois avec un ressort de rappel (34, 36) et les deux ressorts de rappel (34, 36) sont conçus avec une force différente.
